Europäisches Patentamt

European Patent Office

Office européen des brevets

(11) Publication number: **0 475 183 A1**

# EUROPEAN PATENT APPLICATION

(21) Application number: **91114309.7**

(51) Int. Cl.5: **B62D 1/10, F16D 1/12**

(22) Date of filing: **26.08.91**

(30) Priority: **11.09.90 IT 6768190**

(43) Date of publication of application:
**18.03.92 Bulletin 92/12**

(84) Designated Contracting States:
**DE ES FR GB SE**

(71) Applicant: **GALLINO COMPONENTI PLASTICI S.p.A.**
**Via Einaudi, 154**
**I-10040 Rivalta (Torino)(IT)**

(72) Inventor: **Malvassora, Giovanni**
**Via Divisione Partigiani Italiani Garibaldi 21**
**I-14100 Asti(IT)**

(74) Representative: **Notaro, Giancarlo et al**
**c/o Jacobacci-Casetta & Perani S.p.A. Via Alfieri, 17**
**I-10121 Torino(IT)**

(54) **A coupling between the hub of a motor-vehicle steering wheel and the steering column.**

(57) A coupling between the hub (6) of a motor-vehicle steering wheel and the steering column (2) includes: a steering column (2) with a splined end portion (2a), a steering-wheel hub (6) with splines (7) on its internal surface, and a bush (14) between the hub (6) and the steering column (2) with splines (3a, 7a) on its internal and external surfaces for cooperating with the splines (3) on the end portion (2a) of the steering column (2) and the splines (7) on the hub (6) respectively. The external and internal surfaces of the bush (14) have different numbers of axial splines (7a, 3a) so that the coupling enables fine angular adjustment between the hub (6) and the steering column (2). A difference of from 1 to 6 between the number of internal (3a) and external (7a) splines on the bush (14) achieves a good compromise between accuracy and speed of adjustment. The device has the advantage that it can be produced very cheaply.

FIG. 1

The present invention relates to a coupling between the hub of a motor-vehicle steering wheel and the steering column.

In conventional coupling systems the end of the steering column has a plurality (in a typical case, 36) of longitudinal splines which mate with corresponding splines on the internal surface of the hub of the steering wheel to connect the steering wheel for rotation with the steering column. The hub and the steering column are normally connected after the steering members of the motor vehicle have been adjusted. Inaccurate fitting of the steering wheel or the misalignment of the steering members when the vehicle is in use may cause the spokes of the steering wheel to be arranged asymmetrically relative to a longitudinal, vertical plane passing through the centre of the hub when the wheels of the motor vehicle are directed straight forwards. In this case, the splines of the steering column allow for discrete angular adjustments (for example, in steps of 10° when there are 36 splines) enabling only coarse adjustment of the angular positions of the spokes of the steering wheel so that, in the worst situation, the spokes remain displaced from their "straight" positions by 5°.

This remaining displacement is annoying to the driver and may also cause the instruments on the dashboard of the motor vehicle to be partially obscured by the spokes of the steering wheel when the vehicle is travelling along straight portions of road.

In order to avoid these problems, European patent No. 148794 proposed a system for the fine angular adjustment of the angular position of the hub of the steering wheel relative to the steering column, including:

- a steering column with a splined end portion,
- a steering-wheel hub with splines on its internal surface,
- a bush between the hub and the steering column with splines on both its internal surface and its external surface for cooperating respectively with the splines on the end portion of the steering column and the splines on the hub in order to connect the hub for rotation with the steering column, and
- means for clamping the hub axially to the steering column.

In this known solution, adjustment is achieved by means of straight splines on one of the cylindrical surfaces of the bush and helical splines on its other cylindrical surface, enabling continuous adjustment of the relative angular positions of the steering column and the hub.

This solution has some disadvantages, however, since it involves a fairly complex structure which makes it quite expensive. Moreover, once the adjustment has been carried out, the presence of internal play means that in any case great care is required in order to centre the steering column perfectly.

The object of the present invention is to propose a coupling which does not have the problems described above.

This object is achieved by the provision of different numbers of splines on the external and internal surfaces of the bush, all the splines being axial.

The coupling thus enables easier angular adjustment between the steering column and the hub of the steering wheel at a cost much lower than that of the solution known from European patent 148794. The invention does not enable the angular position of the steering wheel to be adjusted continuously but enables discrete adjustment with a degree of accuracy which is nevertheless sufficient to prevent any appreciable problems resulting from the incorrect positioning of the steering wheel, as will be described in detail below. The degree of accuracy depends upon the numbers of splines in the internal and external surfaces of the bush.

Further advantages are achieved if the difference between the numbers of splines on the internal and external surfaces of the bush is between 1 and 8 and is preferably 4. A good compromise between the needs for accurate but, nevertheless, for quick adjustment consists of the selection of a difference of from 1 to 6. The best compromise is when the difference is 4.

The coupling is suitable for most steering columns available commercially without modification and enables a fine adjustment of the angular position of the steering wheel relative to the steering column such that the driver of the motor vehicle cannot visually detect the displacement of the spokes from their optimal positions.

The invention is explained in detail below with reference to the appended drawings, provided purely by way of non-limiting example, in which:

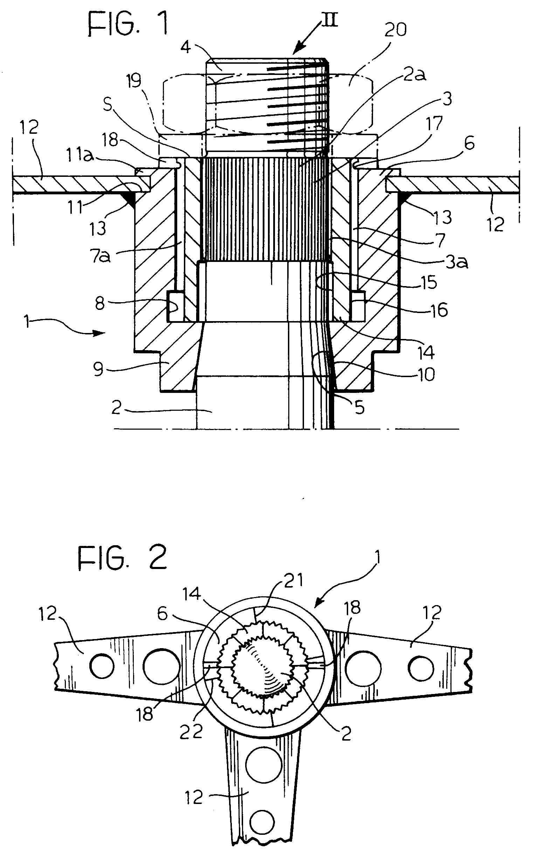

Figure 1 is a partially sectioned side elevational view of the coupling, and

Figure 2 is a view taken on the arrow II of Figure 1.

With reference to the drawings, the coupling of the invention for connecting a steering column and the hub 6 of the steering wheel of a motor vehicle is generally indicated 1.

The steering column 2 has a splined end portion 2a with external axial splines 3. The portion 2a with the splines 3 is defined at its end nearest the steering members by a frustoconical portion 5, and at its opposite end by a threaded end 4.

The hub 6 of the steering wheel is constituted by a tubular element with internal axial splines 7 which end near an internal relief groove 8. The smooth end portion of the hub nearest the steering members has a narrower, frustoconical portion 10 which engages the frustoconical portion 5 of the steering column 2. The hub 6 has an external, peripheral seat 11 in which the inner ends of the spokes 12 of the steering wheel are inserted. Two radial grooves 18, the purpose of which will be described below, are spaced 180° apart near the seat 11. The spokes 12 are fixed to the hub by welds 13. A portion 11a of the edge of the hub 6 is then squashed in a press so as to be bent over the internal ends of the spokes 12 to achieve further mechanical clamping of the spokes to the hub.

A bush 14 inserted between the steering column 2 and the hub 6 of the steering wheel has axial splines 7a and 3a on its external and internal surfaces for engaging the internal splines 7 of the hub 6 and the external splines 3 of the steering column 2, respectively. The internal and external splines 3a and 7a of the bush 14 have respective relief grooves 15 and 16 at their ends. Near an upper edge S of the bush 14 is an external circumferential groove 17, the use of which will be described below.

The entire coupling is clamped onto the steering column by the fitting of a washer 19, shown in broken outline in the drawing, which constitutes a shoulder for the end of the hub 6 opposite its end with the frustoconical hole 10 and prevents axial movements of the bush 14. A nut 20, shown in broken outline, which enagages the threaded end 14 of the steering column 2, is tightened onto the washer 19 so as to prevent any movement of the components of the coupling.

Locating notches 21 are arranged radially on the bush 14 and the hub 6 of the steering wheel has corresponding notches 22, for facilitating the adjustment of the relative angular positions of the two elements.

In this embodiment, the axial splines 7-7a have pseudo-triangular tooth-shaped profiles.

Once the steering members of the motor vehicle have been adjusted, the steering wheel can be fitted onto the steering column 2. First the hub 6 is fitted and the spokes 12 of the steering wheel are aligned perfectly so that the frustoconical hole 10 engages the frustoconical portion 5. The steering wheel is then kept stationary whilst the adjustment bush14 is inserted between the hub 6 and the steering column 2, its correct relative position being found by rotating it by one tooth at a time.

If adjustments are necessary when the steering wheel has already been fitted (for example, if the steering members have become misaligned), the nut 20 and the washer 19 are removed and the external groove 17 in the bush 14 is gripped with suitable tweezers through the grooves 18 in the hub. The bush is thus withdrawn until the splines 7, 7a and 3, 3a are disengaged, the bush 14 being left partially inserted with its portion with the relief grooves 15 and 16 between the steering column 2 and the hub 6 and the new adjustment is then carried out until the desired centering configuration is obtained.

For a steering column with 36 splines on its splined end 3, the rotation of the bush 14 by one tooth corresponds to its rotation through an angle of 10° relative to the steering column 2. In this embodiment, the bush 14 has 40 external teeth so that the rotation of the hub 6 by one tooth relative to the bush 14 corresponds to its rotation through 9°. In theory, therefore, if the bush 14 is rotated anticlockwise on the steering column 2 by one tooth, it is displaced through 10° anticlockwise. If the hub 6 is rotated clockwise relative to the bush 14 by one tooth, it is rotated through 9° clockwise. The difference between the two rotations which, in this case, corresponds to 1° anticlockwise, is the smallest adjustment which can be achieved between the steering column 2 and the hub 6 of the steering wheel. In the worst situation, the steering wheel will be out of position by half the smallest adjustment which thus corresponds to half a degree. A displacement of this size is not detectable visually by the driver of the motor vehicle.

In the embodiment described, the adjustment can be carried out quite quickly since in the configuration with 36 internal splines and 40 external splines in the bush 14 there are four possible alignment positions per 360°. A bush, for example, with 37 external splines used with the same steering column with 36 splines achieves an adjustment tolerance of 0.27°, but this corresponds to only one possible alignment position per 360° and adjustment is thus slower than when the bush has 40 splines. For a steering column with 40 splines and a hub with 44 splines, the tolerance will be 0.8° with four alignment positions per 360°. For a steering column with 42 splines, if a bush with 45 splines is selected, the tolerance will be 0.6° with three alignment positions per 360° and, if the bush has 48 splines, the tolerance will be 1.1° with six alignment positions per 360°.

The accuracy and speed of the adjustment can thus be altered by varying the number of splines on the hub 6 in comparison with the number on the steering column 2.

Naturally, the principle of the invention remaining the same, the forms of embodiment and details of construction may be varied widely without thereby departing from the scope of the present invention.

## Claims

1. A coupling for connecting the hub (6) of a motor-vehicle steering wheel to the steering column (2) including:

- a steering column (2) with a splined end portion (2a),
- a steering-wheel hub (6) with splines(7) on its internal surface,
- a bush (14) between the hub (6) and the steering column (2) with splines (3a, 7a) on both its internal surface and its external surface for cooperating respectively with the splines (7) on the end portion of the steering column (2) and with the splines on the hub (6) in order to connect the hub (6) for rotation with the steering column (2), and
- means (19, 20) for clamping the hub (6) axially on the steering column (2),

characterised in that the external and internal surfaces of the bush (14) have different numbers of splines (3a, 7a) and in that all the splines are axial.

2. A coupling according to Claim 1, characterised in that the difference between the numbers of splines on the external and internal splined surfaces of the bush (14) is from 1 to 8 and preferably 4.

3. A coupling according to Claim 1, characterised in that there is an external circumferential groove (17) near an upper edge (S) of the bush (14), the groove (17) being partially opposite radial grooves (18) in the hub (6) in the assembled condition, so that the bush (14) can be gripped and withdrawn from the hub (6).

4. A coupling according to Claim 3, characterised in that the bush (14) includes an internal relief groove (15) and an external relief groove (16) near its end opposite its upper edge (S) for enabling the bush (14) to rotate whilst remaining partially between the steering column (2) and the hub (6) when the splines (3, 3a) coupling the steering column (2) and the bush (14) and the splines (7, 7a) coupling the hub (6) and the bush (14) are disengaged.

5. A coupling according to any one of Claims 2 to 4, characterised in that the clamping means comprise first and second annular shoulder bodies (9, 19) spaced apart axially on the steering column (2).

6. A coupling according to Claim 5, characterised in that the first (9) of the two shoulder bodies is integral with the hub (6) and has a frustoconical internal surface (10) for engaging a corresponding frustoconical surface (5) on the steering column (2) near the splines on its end portion (2a).

7. A coupling according to Claim 5 or Claim 6, characterised in that the second shoulder body is constituted by a washer (19) which is clamped axially between a nut (20) screwed onto the steering column (2) and the hub (6).

8. A coupling according to any one of the preceding claims, characterised in that the splines (7, 7a) on the external surface of the bush (14) and on the internal surface of the hub (6) are constituted by teeth with pseudo-triangular profiles.

The whole substantially as described and illustrated and for the purposes specified.

FIG. 1

FIG. 2

European Patent Office

# EUROPEAN SEARCH REPORT

Application Number

## DOCUMENTS CONSIDERED TO BE RELEVANT

EP 91114309.7

| Category | Citation of document with indication, where appropriate, of relevant passages | Relevant to claim | CLASSIFICATION OF THE APPLICATION (Int. Cl.5) |
|---|---|---|---|
| X | EP - A2/A3 - 0 300 338 (AUDI) * Abstract * | 1,2 | B 62 D 1/10 F 16 D 1/12 |
| A | -- | 3-8 | |
| D,A | EP - A2/A3 - 0 148 794 (ECKENDORFF) * Totality * . | 1-8 | |
| A | -- EP - A1 - 0 320 333 (ECIA) * Fig. * | 1-8 | |
| A | -- FR - A2 - 2 600 134 (PEUGEOT) * Abstract * ---- | 1-8 | |

TECHNICAL FIELDS SEARCHED (Int. Cl.5)

B 62 D
F 16 D

The present search report has been drawn up for all claims

| Place of search | Date of completion of the search | Examiner |
|---|---|---|
| VIENNA | 15-10-1991 | KREHAN |

EPO FORM 1503 03.82 (P0401)